# FASCICULE DE BREVET EUROPEEN

(11) **EP 1 023 934 B1**
(45) Date de publication et mention de la délivrance du brevet: **28.03.2007**
(21) Numéro de dépôt: 00400016.2
(22) Date de dépôt: 05.01.2000
(51) Int. Cl.: B01D 53/047, B01D 53/053, C01B 3/56

(54) **Procédé d'épuration d'un gaz par adsorption**
Verfahren zur Reinigung eines Gases durch Adsorption
Process for purifying a gas by adsorption

(30) Priorité: 29.01.1999 FR 9901035
(43) Date de publication de la demande: 02.08.2000
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Monereau, Christian, 75011 Paris (FR)
(74) Mandataire: Pittis, Olivier

(56) Documents cités:
- EP-A- 0 538 140
- EP-A- 0 890 387

## Description

La présente invention est relative à un procédé d'épuration d'un gaz contenant des impuretés préférentiellement adsorbables, notamment d'hydrogène, par adsorption à pression variable (PSA), du type mettant en oeuvre plusieurs adsorbeurs avec, pour chaque adsorbeur, un cycle comprenant les phases opératoires suivantes, lesquelles sont décalées d'un adsorbeur à l'autre d'un nième de la durée de la durée du cycle, ou n désigne le nombre d'adsorbeurs : adsorption sensiblement isobare à une pression haute du cycle, cette phase d'adsorption comportant l'admission du gaz impur à traiter dans l'adsorbeur par une première extrémité, dite extrémité d'entrée, de l'adsorbeur, avec circulation de ce gaz dans l'adsorbeur et soutirage simultané par l'autre extrémité de l'adsorbeur de gaz épuré dont une partie au moins constitue le gaz produit, le sens de circulation dans l'adsorbeur au cours de cette phase de production étant appelé co-courant et le sens inverse de circulation étant appelé contre-courant; régénération de l'adsorbeur se terminant par au moins une étape finale dans laquelle un gaz résiduaire est soutiré à contre-courant de l'adsorbeur; et remontée en pression jusqu'à la pression haute du cycle.

L'invention s'applique en particulier à la production de gaz disponibles en quantités limitées tels que l'hydrogène, l'hélium et le néon, la production d'hydrogène étant l'application la plus importante.

Pour la production de tels gaz, le rendement d'extraction est généralement le paramètre prépondérant. Pour maximiser les performances, les durées des différentes étapes sont choisies suffisamment longues pour que les adsorbants travaillent à l'équilibre, c'est-à-dire pour qu'il n'y ait pas de limitation cinétique. La durée d'adsorption pour un adsorbeur est ainsi typiquement de l'ordre de 2 à 4 minutes pour des durées totales de cycle généralement supérieures à 10 minutes.

En vue d'augmenter le rendement, de nombreux cycles d'adsorption à pression variable (Pressure Swing Adsorption ou PSA) comportant, au cours de la phase de régénération, plusieurs équilibrages de pressions successifs, ont été proposés.

Cependant, cette dernière technique est coûteuse en investissement, car elle conduit à installer un grand nombre d'adsorbeurs ayant chacun une dimension accrue. De plus, ce surinvestissement est particulièrement pénalisant lorsque la demande maximale de gaz de production n'est que temporaire.

Par ailleurs, le document EP-A-538 140 décrit un procédé selon le préambule de la revendication 1.

L'invention a pour but de permettre d'atteindre de façon particulièrement économique des rendements d'extraction élevés, aussi bien pour des gaz impurs déjà très riches (c'est-à-dire, dans le cas de l'hydrogène, contenant typiquement au moins 90%, et généralement au moins 98 à 99%, d'hydrogène) que pour des gaz impurs nettement plus pauvres, contenant typiquement, dans le cas de l'hydrogène, jusqu'à 30% environ d'impuretés.

A cet effet, l'invention a pour objet un procédé du type précité, caractérisé en ce que :
- on recycle une partie variable dudit gaz résiduaire, représentant de 10 à 30% du débit de gaz épuré produit, dans le gaz impur à traiter, le reste de ce gaz résiduaire constituant une purge; et
- on réduit la durée du cycle lorsque l'on effectue ledit recyclage, d'autant plus que le débit recyclé est plus grand.

Le procédé suivant l'invention peut comporter une ou plusieurs des caractéristiques suivantes, prises isolément ou suivant toutes les combinaisons techniquement possibles :
- le débit de gaz résiduaire recyclé est temporairement nul et temporairement compris entre 10 et 30% du débit de gaz épuré produit;
- on recycle du gaz résiduaire lorsque et uniquement lorsque le débit de gaz produit est supérieur à une valeur prédéterminée;
- on maintient constant le débit de gaz impur d'alimentation, et on fait varier le débit de gaz résiduaire recyclé en fonction du débit de gaz épuré produit, les variations de ces deux débits s'effectuant dans le même sens;

- la diminution de la durée du cycle est comprise entre 1 et 30% environ de la durée du cycle sans recyclage;
- ladite régénération commence par une étape unique de dépressurisation à co-courant par équilibrage de pressions avec un autre adsorbeur en phase de remontée en pression;
- la régénération comprend deux dites étapes finales, à savoir
   (a) une dépressurisation à contre-courant jusqu'à une pression basse du cycle; et
   (b) une élution à contre-courant;
- ladite étape unique de dépressurisation à co-courant par équilibrage de pressions est suivie d'une étape de seconde dépressurisation à co-courant, le gaz issu de l'adsorbeur pendant cette étape étant utilisé comme gaz d'élution;
- on utilise une unité d'adsorption à trois adsorbeurs, et le gaz issu de l'adsorbeur au cours de l'étape de seconde dépressurisation à co-courant est envoyé à une capacité auxiliaire d'élution; et
- on utilise une unité d'adsorption à quatre adsorbeurs, et le gaz issu de l'adsorbeur au cours de l'étape de seconde dépressurisation à co-courant est directement envoyé dans un autre adsorbeur pour réaliser son élution à contre-courant.

Des exemples de mise en oeuvre de l'invention vont maintenant être décrits en regard des dessins annexés, sur lesquels :
- la Figure 1 représente schématiquement une installation d'épuration d'hydrogène conforme à l'invention;
- la Figure 2 est un diagramme illustrant le cycle de fonctionnement de cette installation; et
- la Figure 3 est une vue schématique partielle d'une variante de l'installation.

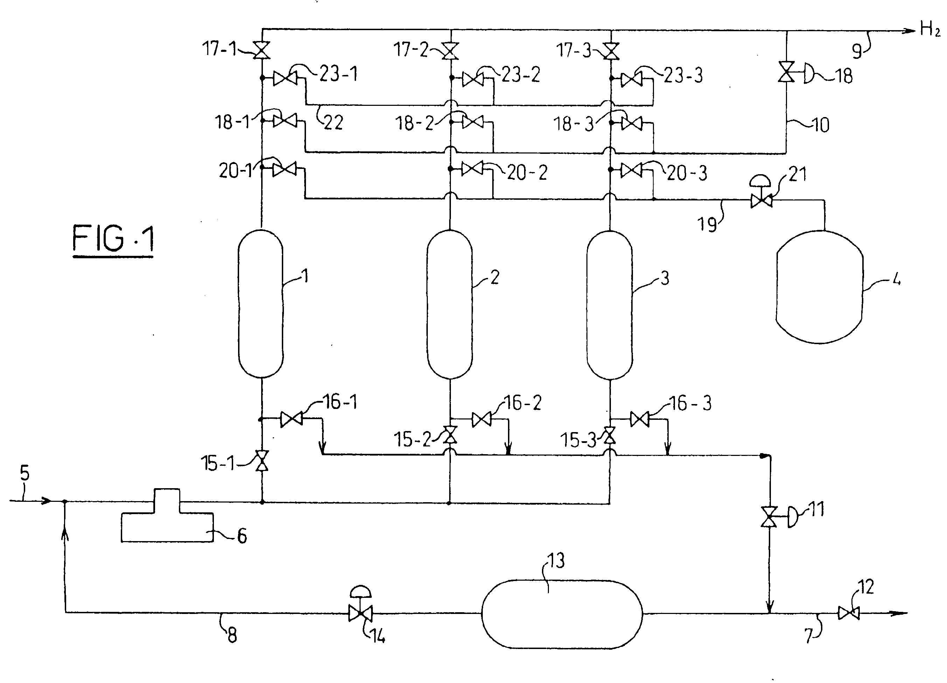

L'installation représentée à la Figure 1 est destinée à produire de l'hydrogène pratiquement pur à partir d'un mélange d'entrée ou "feed" constitué par de l'hydrogène impur. Ce gaz d'alimentation peut être déjà riche en hydrogène, c'est-à-dire contenant typiquement au moins 90% environ, et généralement 98 à 99% au moins, d'hydrogène. Il peut aussi être nettement plus pauvre, c'est-à-dire contenir typiquement 70 à 90% H₂.

L'installation comprend trois adsorbeurs 1 à 3, une capacité auxiliaire 4, une ligne d'admission 5 équipée d'un compresseur 6, une ligne de purge 7, une ligne de recyclage 8 piquée sur cette ligne 7 et reliée à la ligne d'admission 5 en amont du compresseur, une ligne 9 de production d'hydrogène épuré, et une ligne 10 de prélèvement d'hydrogène épuré sur la ligne 9.

La ligne de purge 7 comporte, respectivement en amont et en aval du piquage de la ligne 8, un organe 11 de réglage de débit et une vanne de purge 12. La ligne 8 est équipée, à partir de la ligne 7, d'une capacité-tampon 13, puis d'un organe 14 de réglage de débit.

La ligne 5 est reliée à l'entrée de chaque adsorbeur par l'intermédiaire d'une vanne respective 15-1, 15-2, 15-3. De même, la ligne 7 est reliée à l'entrée de chaque adsorbeur par l'intermédiaire d'une vanne respective 16-1, 16-2, 16-3.

La ligne 9 est reliée à la sortie de chaque adsorbeur par l'intermédiaire d'une vanne respective 17-1, 17-2, 17-3. De même, la ligne 10, équipée près de son piquage sur la ligne 9 d'un organe de réglage de débit 18, est reliée à la sortie de chaque adsorbeur par l'intermédiaire d'une vanne respective 18-1, 18-2, 18-3.

La capacité 4 peut être reliée à la sortie de chaque adsorbeur par une conduite 19 équipée de trois vannes 20-1, 20-2 et 20-3 respectivement et d'un organe de réglage de débit 21 situé près de l'entrée de la capacité.

Par ailleurs, une ligne d'équilibrage 22 équipée de vannes respectives 23-1, 23-2 et 23-3 permet de relier deux à deux les sorties des trois adsorbeurs.

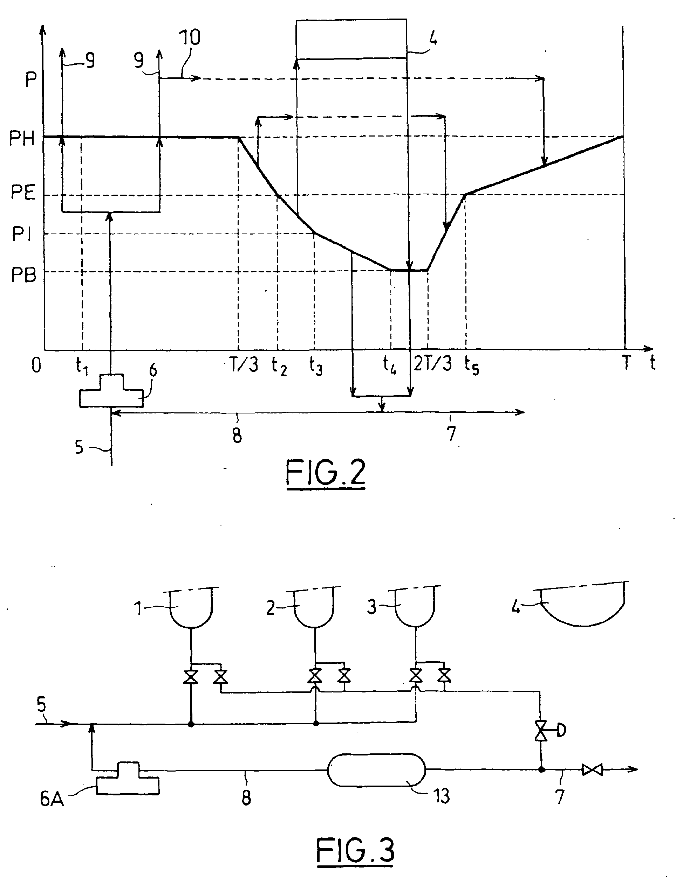

Au moyen de cette installation, qui comporte des moyens de commande et de régulation connus et non représentés, on réalise pour chaque adsorbeur un cycle que l'on a illustré à la Figure 2 en référence à l'adsorbeur 1. Si T désigne la durée du cycle, le fonctionnement de l'adsorbeur 2 s'en déduit par décalage dans le temps de T/3 et celui de l'adsorbeur 3 par décalage dans le temps de 2T/3.

Sur la Figure 2, où les temps t sont portés en abscisses et les pressions absolues P en ordonnées, les traits orientés par des flèches indiquent les mouvements et destinations des courants gazeux; lorsque les flèches sont parallèles à l'axe des ordonnées, elles indiquent, en outre, le sens de circulation dans un adsorbeur : lorsqu'une flèche est dans le sens des ordonnées croissantes (vers le haut du diagramme), le courant est dit à co-courant, dans l'adsorbeur; si la flèche dirigée vers le haut est située au-dessous du trait indiquant la pression dans l'adsorbeur, le courant pénètre dans l'adsorbeur par l'extrémité d'entrée de l'adsorbeur; si la flèche, dirigée vers le haut, est située au-dessus du trait indiquant la pression, le courant sort de l'adsorbeur par l'extrémité de sortie de l'adsorbeur, les extrémités d'entrée et de sortie étant respectivement celles du gaz à traiter et du gaz soutiré en phase de production isobare; lorsqu'une flèche est dans le sens des ordonnées décroissantes (vers le bas du diagramme), le courant est dit à contre-courant, dans l'adsorbeur. Si la flèche dirigée vers le bas est située au-dessous du trait indiquant la pression de l'adsorbeur, le courant sort de l'adsorbeur par l'extrémité d'entrée de l'adsorbeur; si la flèche dirigée vers le bas est située au-dessus du trait indiquant la pression, le courant pénètre dans l'adsorbeur par l'extrémité de sortie de l'adsorbeur, les extrémités d'entrée et de sortie étant toujours celles du gaz à traiter et du gaz soutiré en phase de production isobare. D'autre part, on a indiqué en traits pleins les courants gazeux qui concernent exclusivement l'adsorbeur 1 et en traits pointillés les courants gazeux en provenance ou en direction d'autres adsorbeurs.

Ainsi, pour l'adsorbeur 1, le cycle comporte les phases suivantes :
(a) De t = 0 jusqu'à T/3, l'hydrogène impur à traiter arrivant sur la ligne 5 et comprimé par le compresseur 6, est introduit sous la haute pression PH du cycle à l'entrée de l'adsorbeur, et un courant isobare d'hydrogène pur est soutiré sous la même pression de la sortie de l'adsorbeur.
   De t=0 à t₁, tout le gaz issu de l'adsorbeur est évacué via la conduite 9 en tant que gaz produit. De t1 à T/3, en revanche, seule une partie de ce courant, évacuée via la ligne 9, constitue la production de l'installation, et le reste est envoyé à une autre adsorbeur en cours d'étape de repressurisation finale décrite plus loin.
(b) de T/3 à 2T/3, l'adsorbeur est régénéré au moyen des étapes suivantes :
   - De T/3 à t2 < 2T/3, la sortie de l'adsorbeur est reliée à celle d'un autre adsorbeur en début de phase de remontée en pression. Cette étape de première dépressurisation à co-courant se poursuit jusqu'à équilibrage des pressions des deux adsorbeurs à une pression d'équilibre PE.
   - De t2 à t3 < 2T/3, du gaz, soutiré de la sortie de l'adsorbeur, est envoyé dans la capacité auxiliaire 4, ce qui poursuit la dépressurisation de l'adsorbeur jusqu'à une pression intermédiaire PI.
   - De t3 à t4 < 2T/3, l'adsorbeur est décomprimé à contre-courant, en fournissant du gaz résiduaire dans la ligne 7. Cette étape se poursuit jusqu'à la pression basse du cycle PB.
   - De t4 à 2T/3, l'adsorbeur est purgé à contre-courant par élution au moyen de gaz prélevé dans la capacité auxiliaire 4, ce qui produit de nouveau du gaz résiduaire envoyé dans la ligne de purge 7.

   Au cours des deux étapes finales de régénération décrites ci-dessus, qui produisent un gaz résiduaire à contre-courant, une partie du gaz résiduaire est recyclée via la ligne 8 et renvoyée à l'aspiration du compresseur 6. Le reste du gaz résiduaire est évacué de l'installation, en temps que purge, via la ligne 7 et la vanne 12.
(c) De 2T/3 à T, l'adsorbeur est repressurisé par les étapes suivantes :
   - De 2T/3 à t5 < T, la pression de l'adsorbeur remonte de PB à PE par équilibrage de pressions avec un autre adsorbeur en cours de première dépressurisation à co-courant, décrite ci-dessus.
   - De t5 à T, étape finale de remise à la pression haute PH par prélèvement d'une partie de l'hydrogène produit via la ligne 10.

Le débit de gaz résiduaire recyclé et les paramètres du procédé sont déterminés de la manière suivante. Le débit de gaz impur à traiter (feed) est supposé constant.

Les caractéristiques suivantes relatives au recyclage sont générales et ne se limitent pas au cycle décrit ci-dessus à titre d'exemple.
(1) Les adsorbeurs ont un volume optimisé pour le débit de feed sans recyclage de gaz résiduaire.
   Cette situation se présente notamment lorsque l'installation a été initialement réalisée sans dispositif de recyclage et que celui-ci a été ajouté par la suite pour augmenter la production d'hydrogène.
(2) Lorsque la demande en hydrogène dépasse le débit nominal obtenu en traitant tout le feed disponible, un débit de gaz résiduaire au plus égal à 30% du débit d'hydrogène produit est recyclé.
(3) Lorsqu'un débit de résiduaire est recyclé, pour maintenir la pureté de l'hydrogène produit, on réduit la durée T du cycle, d'autant plus que le débit recyclé est plus grand.

Dans ces conditions, le débit traité (feed + gaz recyclé) augmente, ainsi par conséquent que les vitesses d'écoulement gazeux dans l'installation Cependant, ces augmentations, jusqu'à une valeur du débit recyclé de l'ordre de 30% du débit de gaz produit, restent suffisamment modérées pour ne pas présenter d'inconvénient du point de vue de la tenue mécanique et de la conduite de l'installation.

La cinétique d'adsorption est moins favorable du fait du raccourcissement des étapes, mais la perte correspondante de rendement est plus que compensée par l'augmentation du débit d'hydrogène traité, comme le montrent les exemples suivants.

### Exemple 1

| |
|---|
| Feed : H2 97%, N2 3% |
| Pression d'adsorption PH : 30 bars abs. |
| Pression de régénération PB : 1,1 bar abs. |
| Cycle à un équilibrage de pressions |
| Adsorbant : zéolite 5A |

(1.1) Avec un recyclage de gaz résiduaire correspondant à 14% du débit d'hydrogène produit, la production pour un cycle optimisé serait en augmentation de 7%.
   En pratique, le cycle devant être accéléré de l'ordre de 15% pour maintenir la pureté de l'hydrogène, la dégradation de rendement de l'unité PSA due a une cinétique moins favorable est de l'ordre de 1%.
   A même débit de feed disponible, le gain net sur la production d'hydrogène, par rapport à l'absence de recyclage, est donc de 7%- 1% = 6%.
(1.2) Avec un recyclage de gaz résiduaire correspondant à 25% du débit d'hydrogène produit, la production pour un cycle optimisé serait en augmentation de 11%.
   En pratique, le cycle devant être accéléré de l'ordre de 30%, le gain sur la production H₂ sera d'environ 9%.

### Exemple 2

| |
|---|
| Feed : H2 80%, N2 20% |
| Pression d'adsorption PH : 30 bars abs. |
| Pression de régénération PB : 1,1 bar abs. |
| Cycle à un équilibrage de pressions |
| Adsorbant : zéolite 5A |

Pour un recyclage représentant 12% du débit de production, soit environ 7% du débit de feed disponible, on augmente la production d'hydrogène de l'ordre de 2,5% à pureté conservée, par rapport à l'absence de recyclage.

Dans les deux cas, on voit que l'on produit plus d'hydrogène du fait du recyclage malgré une baisse du rendement intrinsèque de l'unité PSA elle-même.

Comme on le comprend, du fait que l'on adapte le débit recyclé à la production d'hydrogène, on ne dépense que l'énergie de compression supplémentaire juste nécessaire à l'excès de gaz produit. De plus, grâce à la variation concomitante de la durée de cycle T, le volume d'adsorbant nécessaire reste celui qui correspond à la production nominale.

Dans l'installation de la Figure 1, le feed est disponible en basse pression, c'est-à-dire sensiblement à la même pression, légèrement supérieure à la pression atmosphérique, que le gaz résiduaire des adsorbeurs. La conduite de recyclage 8 est par suite directement reliée à l'aspiration du compresseur 6.

En variante (Figure 4), si le feed est disponible sous la haute pression PH, le gaz résiduaire recyclé, issu de la capacité-tampon 13, est comprimé à la même pression PH par un compresseur 6A. Dans cette variante, comme représenté, l'organe de réglage de débit 14 de la Figure 1 peut être supprimé.

Le réglage du débit recyclé peut être continu, ou s'effectuer par gradins, par exemple 0, 25%, 50%, 75% et 100% du débit recyclé maximal.

Le cycle décrit plus haut n'est qu'un exemple des cycles PSA auxquels peut s'appliquer l'invention.

Ainsi, parmi les variantes possibles, on peut citer le nombre d'adsorbeurs; l'absence de la capacité auxiliaire 4 (dès lors que le gaz issu d'un adsorbeur va directement dans un autre adsorbeur en cours d'élution, ce qui peut être le cas avec une unité PSA à quatre adsorbeurs); la repressurisation qui peut durer sur toute une phase, en se superposant par exemple, en début de repressurisation, à l'équilibrage de pressions, ou qui peut s'effectuer partiellement à co-courant par du gaz à traiter; ou encore les agencements de vannes.

## Revendications

1. Procédé d'épuration d'un gaz contenant des impuretés préférentiellement adsorbables, notamment d'hydrogène, par adsorption à pression variable (PSA), du type mettant en oeuvre plusieurs adsorbeurs (1 à 3) avec, pour chaque adsorbeur, un cycle comprenant les phases opératoires suivantes, lesquelles sont décalées d'un adsorbeur à l'autre d'un nième de la durée (T) du cycle, ou n désigne le nombre d'adsorbeurs : adsorption sensiblement isobare à une pression haute du cycle, cette phase d'adsorption comportant l'admission du gaz impur à traiter dans l'adsorbeur par une première extrémité, dite extrémité d'entrée, de l'adsorbeur, avec circulation de ce gaz dans l'adsorbeur et soutirage simultané par l'autre extrémité de l'adsorbeur de gaz épuré dont une partie au moins constitue le gaz produit, le sens de circulation dans l'adsorbeur au cours de cette phase de production étant appelé co-courant et le sens inverse de circulation étant appelé contre-courant; régénération de l'adsorbeur se terminant par au moins une étape finale dans laquelle un gaz résiduaire est soutiré à contre-courant de l'adsorbeur; et remontée en pression jusqu'à la pression haute (PH) du cycle,
**caractérisé en ce que** :
- on recycle une partie variable dudit gaz résiduaire, représentant de 10 à 30% du débit de gaz épuré produit, dans le gaz impur à traiter, le reste de ce gaz résiduaire constituant une purge; et
- on réduit la durée (T) du cycle lorsque l'on effectue ledit recyclage, d'autant plus que le débit recyclé est plus grand.

2. Procédé suivant la revendication 1, **caractérisé en ce que** le débit de gaz résiduaire recyclé est temporairement nul et temporairement compris entre 10 et 30% du débit de gaz épuré produit.

3. Procédé suivant la revendication 1 ou 2, **caractérisé en ce qu'**on recycle du gaz résiduaire lorsque et uniquement lorsque le débit de gaz produit est supérieur à une valeur prédéterminée.

4. Procédé suivant l'une quelconque des revendications 1 à 3, **caractérisé en ce qu'**on maintient constant le débit de gaz impur d'alimentation, et on fait varier le débit de gaz résiduaire recyclé en fonction du débit de gaz épuré produit, les variations de ces deux débits s'effectuant dans le même sens.

5. Procédé suivant l'une quelconque des revendications 1 à 4, **caractérisé en ce que** la diminution de la durée (T) du cycle est comprise entre 1 et 30% environ de la durée du cycle sans recyclage.

6. Procédé suivant l'une quelconque des revendications 1 à 5, **caractérisé en ce que** ladite régénération commence par une étape unique de dépressurisation à co-courant par équilibrage de pressions avec un autre adsorbeur en phase de remontée en pression.

7. - Procédé suivant l'une quelconque des revendications 1 à 6, **caractérisé en ce que** la régénération comprend deux dites étapes finales, à savoir
(a) une dépressurisation à contre-courant jusqu'à une pression basse (PB) du cycle; et
(b) une élution à contre-courant.

8. Procédé suivant la revendication 7, **caractérisé en ce que** ladite étape unique de dépressurisation à co-courant par équilibrage de pressions est suivie d'une étape de seconde dépressurisation à co-courant, le gaz issu de l'adsorbeur pendant cette étape étant utilisé comme gaz d'élution.

9. Procédé suivant la revendication 8, **caractérisé en ce qu'**on utilise une unité d'adsorption à trois adsorbeurs (1 à 3), et **en ce que** le gaz issu de l'adsorbeur au cours de l'étape de seconde dépressurisation à co-courant est envoyé à une capacité auxiliaire d'élution (4).

10. Procédé suivant la revendication 8, **caractérisé en ce qu'**on utilise une unité d'adsorption à quatre adsorbeurs, et **en ce que** le gaz issu de l'adsorbeur au cours de l'étape de seconde dépressurisation à co-courant est directement envoyé dans un autre adsorbeur pour réaliser son élution à contre-courant.

## Claims

1. Method for purifying a gas containing preferably adsorbable impurities, particularly hydrogen, by pressure swing adsorption (PSA), of the type using a plurality of adsorbers (1 to 3) with, for each adsorber, a cycle comprising the following operating phases, which are offset from one adsorber to the other by one nth of the cycle time (T), where n denotes the number of adsorbers: substantially isobaric adsorption at a high pressure of the cycle, this adsorption phase comprising the intake of impure gas to be treated in the adsorber via a first end, called the inlet end of the adsorber, with circulation of this gas in the adsorber and simultaneous withdrawal of purified gas via the other end of the adsorber, at least a portion of which gas is the product gas, the flow direction in the adsorber during this production phase being called cocurrent and the reverse flow direction being called countercurrent; regeneration of the adsorber terminating in at least one final step in which an offgas is countercurrently withdrawn from the adsorber; and pressure increase to the high pressure (HP) of the cycle, **characterized in that**:
- a variable part of the said offgas, representing 10 to 30% of the flow of purified gas produced, is recycled in the impure gas to be treated, the remainder of this offgas constituting a purge; and
- the cycle time (T) is reduced when the said recycling is carried out, particularly as the recycle rate increases.

2. Method according to Claim 1, **characterized in that** the offgas recycle rate is temporarily zero and temporarily between 10% and 30% of the flow rate of purified gas produced.

3. Method according to either of Claims 1 and 2, **characterized in that** offgas is recycled when and only when the flow rate of gas produced is higher than a predefined value.

4. Method according to any one of Claims 1 to 3, **characterized in that** the flow rate of impure feed gas is kept constant, and the flow rate of recycled offgas is varied according to the flow rate of purified gas produced, these two flow rates being varied in the same direction.

5. Method according to any one of Claims 1 to 4, **characterized in that** the decrease of the cycle time (T) is between 1 and about 30% of the cycle time without recycling.

6. Method according to any one of Claims 1 to 5, **characterized in that** the said regeneration begins with a single cocurrent depressurization step by pressure balancing with another adsorber in a pressure increase phase.

7. Method according to any one of Claims 1 to 6, **characterized in that** the regeneration comprises two said final steps, that is:
(a) a countercurrent depressurization to a low pressure (LP) of the cycle; and
(b) a countercurrent elution.

8. Method according to Claim 7, **characterized in that** the said single step of cocurrent depressurization by pressure balancing is followed by a second cocurrent depressurization step, the gas issuing from the adsorber during this step being used as elution gas.

9. Method according to Claim 8, **characterized in that** an adsorption unit with three adsorbers (1 to 3) is used, and **in that** the gas issuing from the adsorber during the second cocurrent depressurization step is sent to an auxiliary elution vessel (4).

10. Method according to Claim 8, **characterized in that** an adsorption unit with four adsorbers is used, and **in that** the gas issuing from the adsorber during the second cocurrent depressurization step is sent directly to another adsorber for carrying out its countercurrent elution.

## Patentansprüche

1. Verfahren zum Reinigen eines Gases, das Verunreinigungen enthält, insbesondere Wasserstoff, die vorzugsweise adsorbierbar sind, durch Adsorption mit variablem Druck (PSA), des Typs, der mehrere Adsorber (1 bis 3) umsetzt mit, für jeden Adsorber, einem Zyklus, der die folgenden Betriebsphasen aufweist, die von einem Adsorber zu einem n. um die Dauer (T) des Zyklus versetzt sind, wobei n die Anzahl Adsorber bezeichnet: im Wesentlichen isobare Adsorption bei einem Hochdruck des Zyklus, wobei diese Adsorptionsphase das Einlassen des zu behandelnden verunreinigten Gases in den Adsorber durch ein erstes Ende des Adsorbers, Eingangsende genannt, aufweist, mit Zirkulation des Gases in dem Adsorber und gleichzeitigem Abzapfen über das andere Ende des Adsorbers von gereinigtem Gas, von dem zumindest ein Teil das produzierte Gas bildet, wobei die Zirkulationsrichtung in dem Adsorber im Laufe dieser Produktionsphase gleichläufig und in die umgekehrte Zirkulationsrichtung gegenläufig genannt wird, Regenerieren des Adsorbers, das mit mindestens einem Endschritt endet, in dem ein Restgas gegenläufig aus dem Adsorber abgezapft wird, und Druckwiederanstieg bis zu dem Hochdruck (PH) des Zyklus, **dadurch gekennzeichnet, dass**
- man einen variablen Teil des Restgases, der 10 bis 30 % des Durchsatzes des erzeugten gereinigten Gases darstellt, in dem zu behandelnden verunreinigten Gas recycliert, wobei der Rest dieses Restgases eine Entlüftung bildet, und
- man die Dauer (T) des Zyklus verringert, wenn man das Recyclieren umso mehr ausführt als der recyclierte Durchsatz groß ist.

2. Verfahren nach Anspruch 1, **dadurch gekennzeichnet, dass** der Durchsatz an recycliertem Restgas vorübergehend gleich Null ist und vorübergehend zwischen 10 und 30 % des erzeugten gereinigten Gases beträgt.

3. Verfahren nach Anspruch 1 oder 2, **dadurch gekennzeichnet, dass** man Restgas recycliert, wenn und nur wenn der erzeugte Gasdurchsatz größer ist als ein vorbestimmter Wert.

4. Verfahren nach einem der Ansprüche 1 bis 3, **dadurch gekennzeichnet, dass** man den Zuführdurchfluss an verunreinigtem Gas konstant hält und den Durchsatz an recycliertem Restgas in Abhängigkeit von dem erzeugten Durchsatz an gereinigtem Gas variieren lässt, wobei die Variationen dieser zwei Durchsätze in die gleiche Richtung erfolgen.

5. Verfahren nach einem der Ansprüche 1 bis 4, **dadurch gekennzeichnet, dass** das Verringern der Dauer (T) des Zyklus zwischen etwa 1 und 30 % der Zyklusdauer ohne Recyclieren liegt.

6. Verfahren nach einem der Ansprüche 1 bis 5, **dadurch gekennzeichnet, dass** das Regenerieren mit einem einzigen Druckablassschritt gleichläufig durch Ausgleichen von Drücken mit einem anderen Adsorber in der Druckwiederanstiegsphase beginnt.

7. Verfahren nach einem der Ansprüche 1 bis 6, **dadurch gekennzeichnet, dass** das Regenerieren zwei so genannte Endphasen aufweist, nämlich
(a) ein gegenläufiges Druckablassen bis zu einem Niederdruck (PB) des Zyklus und
(b) ein gegenläufiges Eluieren.

8. Verfahren nach Anspruch 7, **dadurch gekennzeichnet, dass** auf den alleinigen gegenläufigen Druckablassschritt durch Ausgleichen von Drücken ein zweiter gleichläufiger Druckablassschritt folgt, wobei das Gas, das aus dem Adsorber während dieses Schritts hervorgeht, als Eluierungsgas verwendet wird.

9. Verfahren nach Anspruch 8, **dadurch gekennzeichnet, dass** man eine Adsorptionseinheit mit drei Adsorbern (1 bis 3) verwendet, und dass das aus dem Adsorber im zweiten gleichläufigen Druckablassschritt hervorgehende Gas zu einem Hilfseluierungsbehälter (4) geleitet wird.

10. Verfahren nach Anspruch 8, **dadurch gekennzeichnet, dass** man eine Adsorptionseinheit mit vier Adsorbern verwendet, und dass das aus dem Adsorber beim zweiten gleichläufigen Druckablassschritt hervorgehende Gas direkt in einen anderen Adsorber geleitet wird, um dessen gegenläufiges Eluieren auszuführen.
